# EUROPÄISCHE PATENTSCHRIFT

(11) **EP 0 950 872 B1**
(45) Veröffentlichungstag und Bekanntmachung des Hinweises auf die Patenterteilung: **04.12.2002**
(21) Anmeldenummer: 99106895.8
(22) Anmeldetag: 08.04.1999
(51) Int. Cl.: G01B 5/18, G01B 5/16, A01C 7/00

(54) **Messlineal für den Ablageabstand und die Ablagetiefe von Saatkörnern**
Measuring ruler for deposition spacing and deposition depth of seed grains
Régle de mesure pour la distance du dépôt et la profondeur du dépôt des semailles de grains

(30) Priorität: 16.04.1998 DE 19816747
(43) Veröffentlichungstag der Anmeldung: 20.10.1999
(73) Patentinhaber: Amazonen-Werke H. Dreyer GmbH & Co. KG, 49205 Hasbergen (DE)
(72) Erfinder: Kemper, Martin Dipl.-Ing., 49205 Hasbergen (DE); Vollmer, Hubert, 49170 Hagen a.T.W. (DE)

(56) Entgegenhaltungen:
- DE-A- 1 933 819
- DE-A- 3 227 621
- DE-U- 29 700 121
- FR-A- 2 229 040
- GB-A- 2 191 290
- US-A- 2 775 037
- US-A- 4 736 524

## Beschreibung

Die Erfindung betrifft ein Meßgerät zur Messung der Ablagetiefe und des Ablageabstandes von Saatkörnern.

Saatkömer werden in von Säscharen gezogenen Furchen im Boden je nach der Kornart in der erforderlichen Ablagetiefe im Boden abgelegt. Wenn Saatkömer mit Einzelkomsägeräten ausgebracht werden, so sollen die Saatkömer auch in einem gleichmäßigen Abstand zueinander im Boden abgelegt sein. Wenn der Landwirt die Ablagetiefe und den Ablageabstand der Saatkörner zueinander überprüfen will, kratzt er mit der Hand oder mit einer Schaufel den Boden von den Saatkörnern und überprüft die Ablagetiefe und den Saatkomabstand mit einem Maßband oder einem Zollstock.

Das Abkratzen der Bodenteile oberhalb der Saatkömer mittels Händen oder einer Schaufel ist relativ schwierig und ungenau. Ebenfalls ist die Meßmethode mit einem Maßband oder einem Zollstock schwierig.

Der Erfindung liegt die Aufgabe zugrunde, ein Meßgerät zur einfachen Messung der Ablagetiefe und des Ablageabstandes bei einfacher Handhabung zu schaffen, welches weiterhin in bevorzugter Weise geeignet ist, den Boden oberhalb der Saatkörner zur Seite zu schieben.

Hierzu schlägt die Erfindung ein kombiniertes Meßgerät zur Messung der Ablagetiefe und des Ablageabstandes von Saatkömer, bestehend aus einem plattenförmigen Element mit einer Längenskala für den Ablageabstand und einer Skala für die Ablagetiefe wobei an dem plattenförmigen Element ein Zeigerelement, dem die Skala für die Ablagetiefe zugeordnet, ist angeordnet ist, vor. Mittels dieses kombinierten Meßgerätes kann einfach und sehr genau der Ablageabstand und die Ablagetiefe gemessen werden. Durch das am plattenförmigen Element angeordnete Zeigerelement mit der zugeordneten Skala für die Ablagetiefe, kann einfacher und besonders genauer Weise die Ablagetiefe gemessen und abgelesen werden.

Desweiteren eignet sich dieses Meßgerät, um den Boden über eine bestimmte Länge, nämlich der Länge des Meßgerätes, oberhalb der abgelegten Saatkörner zur Seite zu schieben. Hierbei ist es dann vorteilhaft, daß dem Meßgerät eine Kratzleiste zugeordnet ist bzw. das Meßgerät als Kratzleiste dienend ausgebildet ist.

Hierbei kann das Zeigerelement schwenkbar angeordnet und die Skala als Bogenskala ausgebildet sein. Es ist jedoch auch möglich, das Zeigerelement quer zur Längsrichtung der Längenskala verschiebbar dem plattenförmigen Element zuzuordnen.

Eine besonders gute Ablesbarkeit des Ablageabstandes der Saatkörner zueinander wird dadurch erreicht, daß die Skala für den Ablageabstand im Bereich der Kratzleiste angeordnet ist.

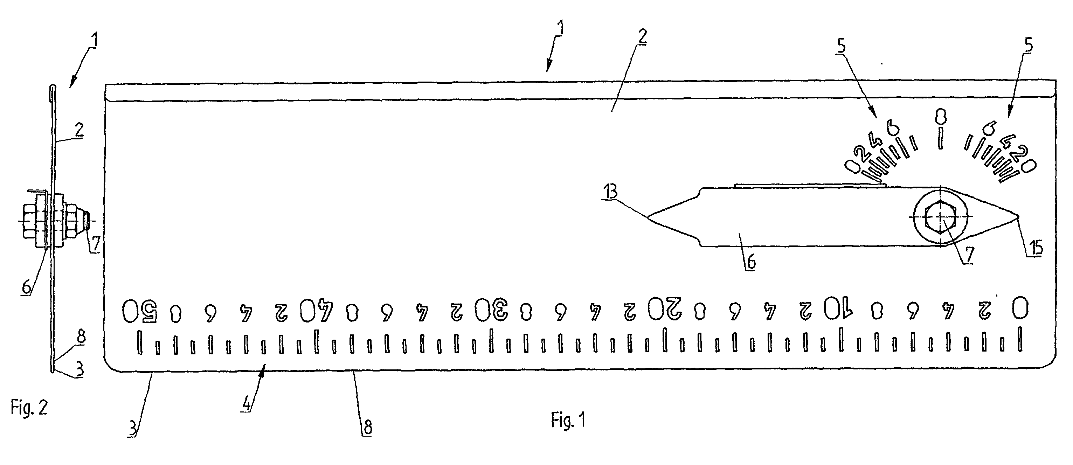

Weitere Einzelheiten der Erfindung sind der Beispielsbeschreibung und den Zeichnungen zu entnehmen. Hierbei zeigen
- Fig.1: das kombinierte Meßgerät in der Vorderansicht,
- Fig.2: das Meßgerät in der Seitenansicht,
- Fig.3: das Meßgerät, mit sich in Meßstellung befindlichen Meßzeiger in der Vorderansicht,
- Fig.4: das Meßgerät gemäß Fig.3 in der Seitenansicht,
- Fig.5: die Ablage der Saatkörner im Boden in der Ansicht V-V,
- Fig.6: die Ablage der Saatkömer in der Ansicht VI-VI,
- Fig.7: die mittels des Meßgerätes abschnittsweise freigekratzten Saatkörner in der Ansicht V-V,
- Fig.8: die freigekratzten Saatkörner in der Ansicht VI-VI,
- Fig.9: die Messung des Ablageabstandes mit dem Meßgerät in der Ansicht VI-VI,
- Fig.10: die Messung des Ablageabstandes in der Ansicht V-V und
- Fig.11: die Messung der Ablagetiefe in der Ansicht V-V.

Das kombinierte Meßgerät 1 besteht aus dem plattenförmigen Element 2. Auf der unteren Längsseite 3 ist die Längenskala 4 zur Messung des Ablageabstandes angeordnet. Desweiteren ist an dem plattenförmigen Element 2 die Skala 5 für die Messung der Ablagetiefe angeordnet. Desweiteren ist an dem plattenförmigen Element 2 ein Zeigerelement 6 angeordnet, welches mit einem Bolzen 7 an dem plattenförmigen Element 2 schwenkbar befestigt ist. Dem Zeigerelement 6 ist die Bogenskala 5 zugeordnet.

Im Bereich der Längenskala 4 ist auf der Unterseite die Kratzleiste 8 angeordnet.

Die Funktionsweise des kombinierten Meßgerätes 1 zur Messung der Ablagetiefe T und des Ablageabstandes A ist folgende:

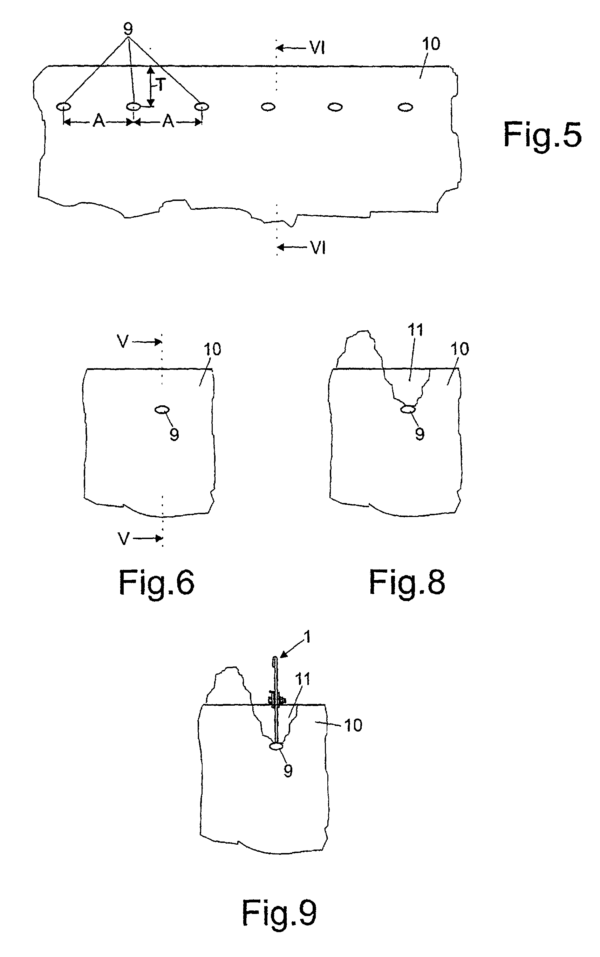

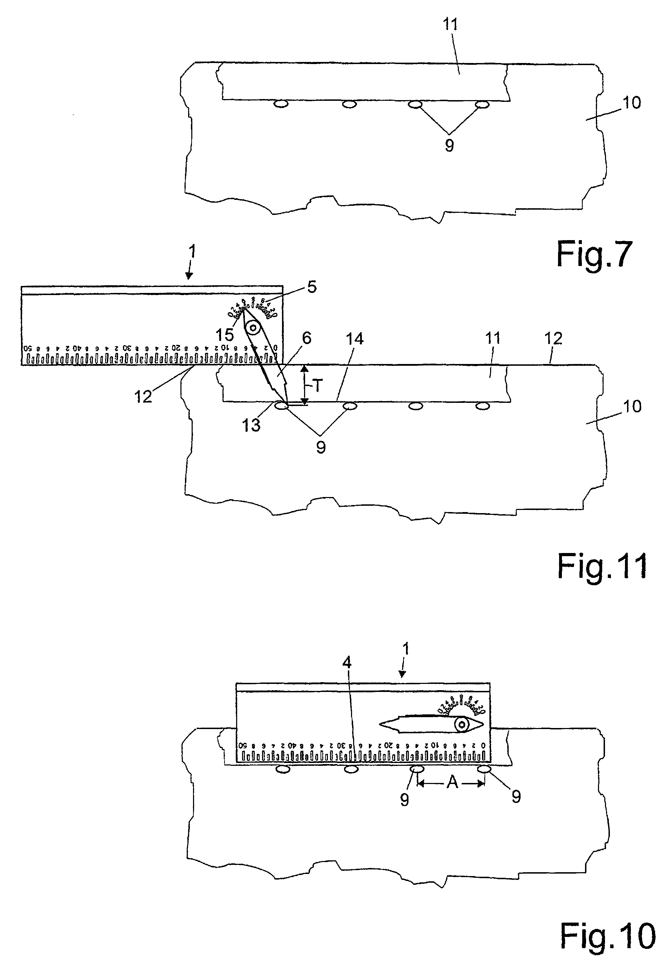

Die Saatkörner 9 sind beispielsweise, wie die Fig.5 und 6 zeigen mittels eines Sägerätes in einem gewünschten Ablageabstand A zueinander im Boden 10 abgelegt. Um die Ablagetiefe T und den Abstand A der einzelnen Saatkörner 9 zueinander zu überprüfen, wird mittels des Meßgerätes 1 mit der Kratzleiste 8 der Boden oberhalb der abgelegten Saatkörner 9 weggekratzt, wie die Fig.7 und 8 zeigen. Anschließend wird das Meßgerät 1 in dem freigekratzten Bereich 11 gesetzt, wie die Fig.9 und 10 zeigen, wobei das Meßgerät 1 derartig eingesetzt wird, daß die Längenskala 4 sich in der Nähe der abgelegten Saatkörner 9 befindet, so daß unmittelbar in gut sichtbarer und ablesbarer Weise der Ablageabstand A der Saatkörner 9 zueinander anhand der Längenskala 4 abgelesen werden kann.

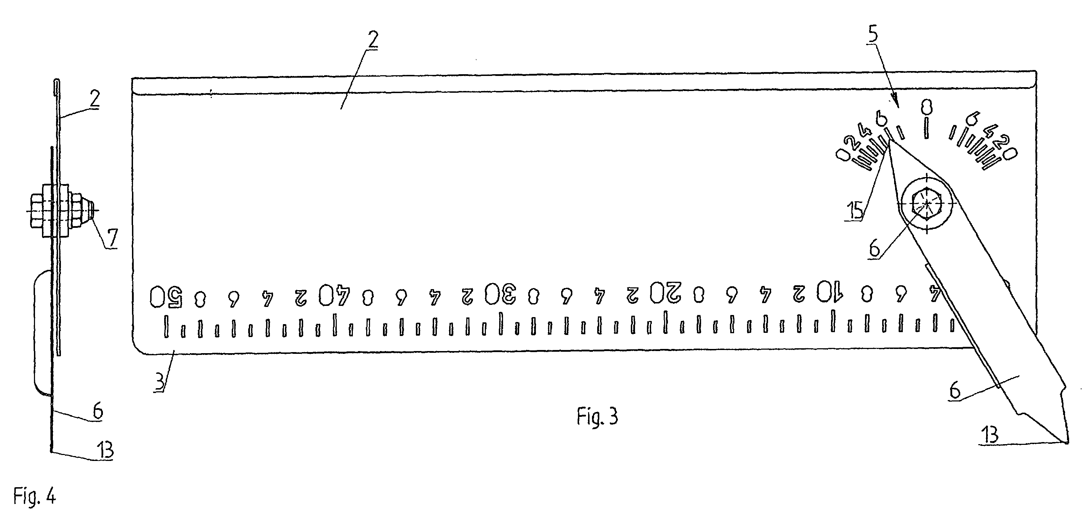

Zur Messung der Ablagetiefe T wird das Meßgerät 1 auf die Oberfläche 12 des Saatbettes entweder in Längsrichtung der Saatreihe oder quer zur Saatreihe aufgesetzt. Das Zeigerelement 6 wird dann entsprechend den Fig.3, 4 und 11 nach unten geschwenkt. Hierbei wird die Spitze 13 des Zeigerelementes 6 auf die Ebene 14, auf welcher die Saatkörner 9 abgelegt bzw. das Saatkorn 9 abgelegt ist, geschwenkt. Die Ablagetiefe T kann dann auf der anderen Seite des Zeigerelementes 6 an dem Zeiger 15 an der Bogenskala 5 abgelesen werden.

## Patentansprüche

1. Kombiniertes Meßgerät (1) zur Messung der Ablagetiefe (T) und des Ablageabstandes (A) von Saatkörnern (9), bestehend aus einem plattenförmigen Element (2) mit einer Längenskala (4) für den Ablageabstand (A) und einer Skala (5) für die Ablagetiefe (T), wobei an dem plattenförmigen Element (2) ein Zeigerelement (6), dem die Skala (5) für die Ablagetiefe (T) zugeordnet, ist angeordnet ist.

2. Meßgerät nach Anspruch 1, **dadurch gekennzeichnet, daß** das Zeigerelement (6) schwenkbar angeordnet ist, und daß die Skala (5) als Bogenskala ausgebildet ist.

3. Meßgerät nach Anspruch 1, **dadurch gekennzeichnet, daß** das Zeigerelement quer zur Längsrichtung der Längenskala verschiebbar angeordnet ist.

4. Meßgerät nach Anspruch 1, **dadurch gekennzeichnet, daß** das Meßgerät (1) eine Kratzleiste (8) aufweist.

5. Meßgerät nach Anspruch 4, **dadurch gekennzeichnet, daß** die Skala (4) für den Ablageabstand (A) im Bereich der Kratzleiste (8) angeordnet ist.

## Claims

1. Combination measuring apparatus (1) for measuring the deposit depth (T) and the deposit spacing (A) at which seeds (9) are deposited, said apparatus comprising a plate-like component (2) having a linear scale (4) for the deposit spacing (A) and a scale (5) for the deposit depth (T), wherein an indicator (6), associated with the scale (5) for the deposit depth (T), is disposed on the plate-like component (2).

2. Measuring apparatus according to claim 1, **characterised in that** the indicator (6) is pivotably disposed, and **in that** the scale (5) is in the form of an arcuate scale.

3. Measuring apparatus according to claim 1, **characterised in that** the indicator is disposed so as to be displaceable transversely relative to the longitudinal direction of the linear scale.

4. Measuring apparatus according to claim 1, **characterised in that** the measuring apparatus (1) has a scraper bar (8).

5. Measuring apparatus according to claim 4, **characterised in that** the scale (4) for the deposit spacing (A) is disposed in the region of the scraper bar (8).

## Revendications

1. Appareil de mesure combiné (1) pour mesurer la profondeur de dépôt (T) et l'intervalle de dépôt (A) de graines de semence (9), appareil composé d'un élément en forme de plaque (2) muni d'une graduation longitudinale (4) pour mesurer l'intervalle de dépôt (A) et d'une graduation (5) pour la profondeur de dépôt (T),
l'élément (2) en forme de plaque comportant un élément en aiguille (6) associé à la graduation (5) de la profondeur de dépôt (T).

2. Appareil de mesure selon la revendication 1,
**caractérisé en ce que**
l'élément en forme d'aiguille (6) est pivotant et la graduation (5) est une graduation courbe.

3. Appareil de mesure selon la revendication 1,
**caractérisé en ce que**
l'élément en forme d'aiguille peut coulisser transversalement à la direction longitudinale de la graduation longitudinale.

4. Appareil de mesure selon la revendication 1,
**caractérisé en ce que**
l'appareil de mesure (1) comporte une raclette (8).

5. Appareil de mesure selon la revendication 4,
**caractérisé en ce que**
la graduation (4) pour mesurer l'intervalle de dépôt (A) se trouve au niveau de la raclette (8).
